# EUROPEAN PATENT SPECIFICATION

(11) **EP 2 052 454 B1**
(45) Date of publication and mention of the grant of the patent: **28.04.2010**
(21) Application number: 08722231.1
(22) Date of filing: 10.03.2008
(51) Int. Cl.: H02K 3/18, H02K 15/095, H02K 3/12, H02K 15/085

(54) **EDGEWISE BENDING PROCESSING METHOD FOR RECTANGULAR WIRE AND BENDING PROCESSING APPARATUS**
KANTENWEISES BIEGUNGSVERARBEITUNGSVERFAHREN FÜR EINEN RECHTECKIGEN DRAHT UND BIEGUNGSVERARBEITUNGSVORRICHTUNG
PROCÉDÉ DE TRAITEMENT DE CINTRAGE SUR CHANT POUR UN FIL RECTANGULAIRE ET APPAREIL DE TRAITEMENT DE CINTRAGE

(30) Priority: 12.03.2007 JP 2007062191
(43) Date of publication of application: 29.04.2009
(73) Proprietor: Toyota Jidosha Kabushiki Kaisha, Toyota-shi Aichi 471-8571 (JP)
(72) Inventor: MATSUSHITA, Masayuki, Toyota-shi Aichi 471-8571 (JP); HARADA, Kenji, Toyota-shi Aichi 471-8571 (JP); FUBUKI, Shingo, Toyota-shi Aichi 471-8571 (JP)
(74) Representative: Smith, Samuel Leonard
(86) International application number: PCT/JP2008/054835
(87) International publication number: WO 2008/114763

(56) References cited:
- EP-A- 1 100 178
- JP-A- 2004 080 860
- JP-A- 2006 288 025
- US-A- 4 446 393

## Description

### TECHNICAL FIELD

The present invention relates to a technique of edgewise bending a rectangular-section wire and particularly to a technique of restraining an inner periphery part of the wire from bulging in an edgewise bending process.

### BACKGROUND ART

Conventionally, there has been used a technique of winding a round-section wire to provide a coil in a stator or rotor of a motor. In recent years, on the other hand, a technique of edgewise winding a rectangular-section wire to produce a coil has been proposed as one of the techniques for enhancing a space factor of a conductor to a slot.

According to a motor component and its manufacturing method disclosed in JP2004-80860A, for example, a coil having continuous bend portions and linear portions can be produced in such a way as to intermittently pressurize the wire with use of two conical rollers.

When the straight long, rectangular-section wire is rolled with the conical rollers, the rectangular-section wire is shaped to conform to a trapezoidal space in cross-section formed between the two conical rollers so that the wire has a cross section thin at the outer periphery and thick at the inner periphery. By this rolling, a material forming the outer periphery part is squeezed forward and backward, extending the rolled portion, thereby forming a bend (a corner). This partial rolling using the conical rollers could consequently produce the coil having continuous bend portions and linear portions. After the rolling, the rectangular-section wire is entirely coated with an insulation material.

Further, JP 2006-288025A discloses a rectangular coil, a manufacturing method for the rectangular coil, and a manufacturing device for the same, whereby a rectangular-section wire is wound edgewise with a jig while an inner side of the wire is supported by a roller. This technique could prevent the inner side of the coil from bulging in the edgewise bending process, thereby avoiding variations in electrical resistance.

When the rectangular-section wire is bent edgewise, the bend portion of the wire is thin at the outer periphery and thick at the inner periphery. This results from that the edgewise bending process causes the same principle as that in JP'860A in which the rectangular-section wire is bent with the conical rollers. Specifically, the bend portion at the outer periphery is extended under pressure in the edgewise bending process, which constricts the bend portion at the inner periphery side, causing transfer of the material forming the wire, resulting in a change in thickness.

In the cross-section of the rectangular-section wire, if a short side of the bend portion at the inner periphery is wider than that at the outer periphery, clearances would be formed between the adjacent wires of a finished coil. In other words, when the coil is mounted in a slot of a stator or rotor, such clearances are liable to decrease a space factor of the coil to the slot.

Accordingly, in JP'025A, the coil is produced in such a manner that a rectangular-section wire previously coated with an insulation coating is inserted in a groove of a roller, the groove having a width equal to the thickness of the wire, and then the wire is bent edgewise with a bending jig, thereby preventing the coil at the inner periphery side from bulging.

### DISCLOSURE OF INVENTION

### PROBLEMS TO BE SOLVED BY THE INVENTION

However, even the conventional technique such as JP'025A would cause a problem that the space factor of the coil mounted in the slot could not be increased sufficiently.

A motor used for driving a vehicle has been required especially to be reduced in size and increased in output power. Therefore, there is an increasingly demand for higher space factor of a conductor to a slot of a rotor or stator.

In JP'860A, the bend portion of the coil made of the rectangular-section wire is purposely deformed into a trapezoidal shape in cross-section. In a finished coil, therefore, the bend portion is thick at the inner periphery and thin at the outer periphery, causing adjacent rectangular-section wires to interfere with one another at the inner periphery side. Consequently, the conductor could not provide a higher space factor to the slot.

In JP'025A, on the other hand, the roller having the groove with a width equal to the length of the short side of the rectangular-section wire in cross-section is used for edgewise bending to solve the problem in JP'860A. The edgewise bending of the rectangular-section wire with the roller having the groove with a width equal to the length of the short side of the wire in cross-section could avoid deformation of the rectangular-section wire in a plastic region.

This results from that the rectangular-section wire could not change in dimension more than the groove width of the roller in the edgewise bending process, so that the material squeezed out from the bend portion at the inner periphery side could only run off toward the outer periphery side. This intends to avoid plastic deformation of the rectangular-section wire at the inner periphery side to maintain the length of the short side of the rectangular-section wire.

However, the applicant investigated and concluded that even the technique disclosed in JP'025A caused a slight increase in length of the short side of the rectangular-section wire. It was therefore found that the space factor of the coil to the slot could not be sufficiently enhanced.

It is conceivable that this slight increase in length of the short side of the rectangular-section wire results from the deformation in an elastic region. In the case where the roller having the groove with a width equal to the length of the short side of the wire, the wire is also elastically deformed. Therefore, when the wire is released from the roller after the edgewise bending process, the elastically deformed part of the wire is restored to its original shape and thus the short side of the wire is slightly increased.
The increase in length of the short side of the rectangular-section wire resulting from the elastic deformation in the edgewise bending process is just slight. However, the rectangular-section wire has to be wound over ten turns to form a coil and accordingly the increase in length of the short side of the wire is accumulated. This results in a decrease in the space factor of the conductor to the slot.

For the coil to be used in a vehicle motor required for further size reduction and higher output power, such a slight increase in length of the short side of the rectangular-section wire resulting from the elastic deformation is undesirable.

The present invention is made in view of the above circumstances and has an object to provide an edgewise bending processing method for a rectangular-section wire and a processing apparatus, whereby an increase in length of a short side of the wire at an inner periphery can be minimized in an edgewise bending process.

### MEANS FOR SOLVING THE PROBLEMS

The invention is defined by the features of the independent claims. Preferred embodiments of the invention are defined in the dependent claims.

An explanation is given below to the operations and advantages of the above edgewise bending processing method for the rectangular-section wire according to the present invention.
The above edgewise bending processing method for a rectangular-section wire comprises the steps of: restraining the rectangular-section wire having a rectangular cross section with long sides and short sides by restraining means in such a way as to press a surface of the wire including the long side and hold the wire in contact with a surface of the wire including the short side; and edgewise bending the rectangular-section wire by bending means; wherein the restraining means restrains part of the wire in a restraining dimension that is shorter than a length of the short side of the wire and in a range of elastic deformation of the wire, and the bending means bends the wire edgewise at the short side of the wire that is in contact with the restraining means.

Some coils to be used for a motor are produced by edgewise bending a rectangular-section wire. In many cases, this rectangular-section wire is made of a metal conductor such as copper.
As mentioned above, such coil has conventionally been produced without considering the influence of elastic deformation. This seems because copper is hard to elastically deform.

Not only the rectangular-section wire but also most materials are plastically deformed and elastically deformed upon receipt of pressure. When the pressure is released, accordingly, the shape of each material plastically deformed remains unchanged but the shape of each material elastically deformed returns by an amount of deformation.

This phenomenon is also caused when the rectangular-section wire is bent edgewise. The applicant confirmed, as mentioned above, that when a rectangular-section wire was bent edgewise with a surface including a long side being pressed and restrained according to the method disclosed in JP2006-288025, the length of the short side of the rectangular-section wire was increased, but slightly, due to elastic deformation.

The restraining dimension of the rectangular-section wire by the restraining means in the edgewise bending process is determined in consideration of the elastic deformation range of the rectangular-section wire so that the restraining dimension is shorter than the short side of the wire in anticipation of a restoration amount resulting from elastic deformation. When the wire is bent edgewise with such restraint, the length of the short side of the wire can be maintained equally before and after the edgewise bending process.

As above, the configuration that the length of the short side of the rectangular-section wire can be maintained in the edgewise bending process is important in a case where dimensional accuracy is required in edgewise bending the rectangular-section wire.

For instance, a coil to be used in a stator of a vehicle motor is essentially required to enhance a coil space factor when it is placed in a slot of the stator. The elastic deformation has little influence on each of the rectangular-section wires bent edgewise. However, in a finished coil made of the rectangular-section wire wound over tens turns, the coil space factor depends on the accuracy because the coil has to be mounted in the slot.

In the case where the coil produced by the edgewise bending process bulges at the inner periphery side due to the elastic deformation, the space factor of the coil to the slot changes by several percent, which was confirmed by the applicant. As to the coil to be used in a vehicle motor or others severely required to be reduced in size and output high power, the coil space factor is desired to increase in consideration of even the influence of the elastic deformation.

Furthermore, in the above method (2), the rectangular-section wire is coated with the coating material. Accordingly, the length of the short side of the wire is influenced by elastic deformation of the coating material in the edgewise bending process and thus tends to increase after the edgewise bending process due to elastic deformation.

In light of a problem that the length of the short side of the wire at the inner periphery is increased due to a difference in length between the inner periphery and the outer periphery of the rectangular-section wire when bent edgewise, a conceivable technique is to edgewise bend the rectangular-section wire while restraining a surface of the wire including the long side. However, simply restraining the wire in the length of the short side will cause elastic deformation of the wire. When the restraining in the edgewise bending process is released, therefore, the elastically deformed part is restored to its original shape. This cause a phenomenon of slightly increasing the length of the short side of the bend portion of the wire due to the elastic deformation as mentioned above.

For instance, when a coil to be used in a stator of a motor is to be produced by edgewise bending a rectangular-section wire, this wire is often made of a copper conductor coated with an insulation coating resin material. The insulation coating material is made of for example enamel, polyamide, and amideimide, which tend to largely change in dimension by elastic deformation.

Resin generally has a higher elastic deformation ratio than metal. Thus, when the rectangular-section wire is coated with for example a coating resin material, the length of the short side of the wire is likely to increase because the elastically deformed portion of the bend part of the wire is restored after the edgewise bending process.

Accordingly, the restraining dimension by the restraining means for edgewise bending is preferably determined in consideration of the elasticity of not only the copper material of the rectangular-section wire but also of the insulation coating material. This makes it possible to maintain the length of the short side of the rectangular-section wire equally before and after the edgewise bending process.

In the method (3), the restraining means includes a flange whereby the surface of the rectangular-section wire including the long side is pressed, a base provided facing the flange, a shaft inserted through the base, and a spacer having thickness corresponding to the restraining dimension, and the spacer is formed with a chamfer at a corner facing a joint part joining the shaft and the flange. The restraining dimension can be ensured by the spacer to always restrain the rectangular-section wire in a constant dimension. It is further possible to determine the dimension in anticipation of the length of the short side of the rectangular-section wire after the edgewise bending.

In the case where the rectangular-section wire is restrained by a technique of directly pressing the rectangular-section wire against the base by the flange, there may occur problems that the base is depressed, the shaft is extended, and the flange tilts in pressurizing the rectangular-section wire.

On the other hand, the use of the spacer can restrict tilting of the flange, allowing the rectangular-section wire to be bent edgewise without any influence of extension of the shaft and depression of the base. In the case where the shaft and the flange are formed in an integral component, the joint part between the shaft and the flange has to be formed with a rounded portion to prevent stress concentration therein. This rounded portion may have an influence on forming of the rectangular-section wire. However, the use of the spacer can prevent the rectangular-section wire from being influenced by such joint part between the shaft and the flange.

The spacer is formed with a chamfer at a corner facing the joint part between the flange and the shaft. Accordingly, the spacer is prevented from coming into contact with the rounded portion of the joint part formed to mitigate stress concentration.

In the method (4), the following steps are repeated: a first step of feeding the rectangular-section wire by feeding means; a second step of holding the wire in place by clamp means and restraining the wire by the restraining means; a third step of edgewise bending the wire by the bending means while the wire is held by the clamp means; and a fourth step of releasing the rectangular-section wire from the clamp means and the restraining means.
Accordingly, the first step can be performed just after the fourth step, effectively enabling repetition of the edgewise bending steps.

The feeding means arranged to feed the rectangular-section wire in the first step is constituted of a mechanism independently of the restraining means and the bending means. While the second to fourth steps are being conducted, the feeding means is preferably returned to the original position. Accordingly, the first step can be started just after termination of the fourth step.

In the configuration (5), the apparatus comprises: restraining means for restraining the rectangular-section wire having a rectangular cross section with long sides and short sides in such a way as to press a surface of the wire including the long side and hold the wire in contact with a surface of the wire including the short side; and bending means for edgewise bending the rectangular-section wire; wherein the restraining means restrains part of the wire in a restraining dimension that is shorter than a length of the short side of the wire and in a range of elastic deformation of the wire, and the bending means bends the wire edgewise at the short side of the wire that is in contact with the restraining means. Even when the rectangular-section wire having been bent edgewise is released from the restraining means and the elastically deformed portion of the wire is returned to its original shape, the increase in length of the short side of the wire can be prevented.

In the configuration (6), the restraining means includes a flange whereby the surface of the rectangular-section wire including the long side is pressed, a base provided facing the flange, a shaft inserted through the base, and a spacer having thickness corresponding to the restraining dimension, and the spacer is formed with a chamfer at a corner facing a joint part joining the shaft and the flange. The restraining dimension by the restraining means is determined depending on the thickness (height) of the spacer. Accordingly, no dimensional error is caused due to mechanical changes of the restraining means. It is therefore possible to prevent an increase in length of the short side of the rectangular-section wire with high accuracy after the edgewise bending process.

### BRIEF DESCRIPTION OF DRAWINGS

Fig. 1 is a schematic configuration view of an edgewise bending processing apparatus of a preferred embodiment;
Fig. 2 is a sectional view of a bending unit, taken along a line A-A in Fig. 1;
Fig. 3 is an external perspective view of a coil produced by the edgewise bending processing apparatus of the embodiment;
Fig. 4 is a schematic plan view showing a state where a rectangular-section wire is bent edgewise by the edgewise bending processing apparatus;
Fig. 5 is a schematic plan view showing a state where an external guide returns to its original position to release the rectangular-section wire;
Fig. 6 is a schematic plan view showing a state where the rectangular-section wire is fed by a feeding mechanism to edgewise bend a second portion of the wire;
Fig. 7 is a schematic plan view showing a state where the second portion of the rectangular-section wire is bent edgewise;
Fig. 8 is a schematic plan view showing a state where a fourth portion of the rectangular-section wire is bent edgewise;
Fig. 9 is an enlarged sectional view showing a state where the rectangular-section wire is pressed by a flange; and
Fig. 10 is a graph showing a relationship between elastic deformation and surface pressure of the rectangular-section wire in the present embodiment.

### BEST MODE FOR CARRYING OUT THE INVENTION

A detailed description of a preferred embodiment of an edgewise bending processing method and apparatus embodying the present invention will now be given referring to the accompanying drawings.

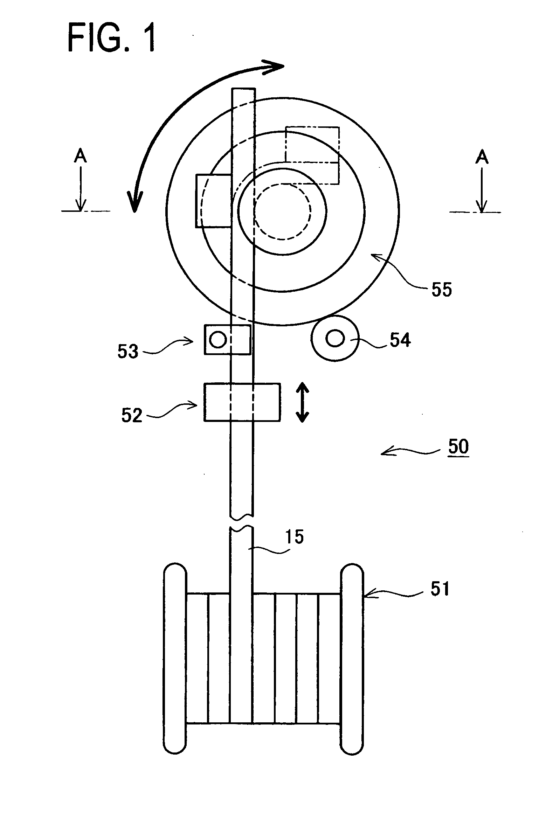

Firstly, the configuration of the edgewise bending processing method and apparatus of the present embodiment will be explained. Fig. 1 is a schematic configuration view of the edgewise bending processing apparatus of the present embodiment.

An edgewise bending processing apparatus 50 includes an uncoiler 51 holding a bobbin around which a rectangular-section wire (hereinafter, simply referred to as a "wire") 15 having a rectangular section is wound, a feeding mechanism 52 serving to a feeding means for unwinding and feeding the wire 15 from the bobbin, a clamp mechanism 53 serving as a clamp means for holding the wire 15 against movement in a feeding direction, and a bending unit 55 serving as a bending means for performing edgewise bending. The bending unit 55 is coupled to a rotary drive mechanism 54 placed adjacent to the bending unit 55 via gears or the like for drive transmission.

The feeding mechanism 52 is arranged to reciprocally move to unwind the wire 15 from the uncoiler 51. This feeding mechanism 52 is configured to chuck the wire 15 and then feed it at a constant rate. The positioning accuracy to feed the wire 15 is important. Accordingly, the feeding mechanism 52 is preferably a mechanism enabling positioning with high accuracy, such as a servo motor.

The wire 15 wound on the bobbin is made of a strip-shaped material having low electrical resistance such as copper. The surface thereof is coated with an insulation coating 15a. The coating 15a has a thickness of several tens µm and is made of a high-insulation resin material such as enamel, polyamide, and amideimide.

The clamp mechanism 53 is arranged to hold the wire 15 against movement in the feeding direction after the wire 15 has been fed by a predetermined distance by the feeding mechanism 52.

The feeding mechanism 52 has to return to the original position after feeding the wire 15 and thus to unchuck the wire 15 once. Prior to the unchucking, the wire 15 is clamped by the clamp mechanism 53 to prevent positional displacement.

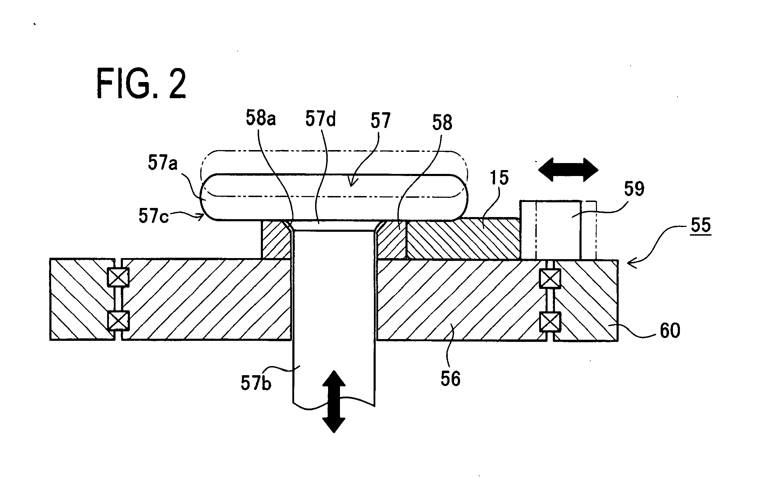

Fig. 2 is a sectional view of the bending unit 55, taken along a line A-A in Fig. 1. The bending unit 55 includes a base 56, a restraining mechanism 57, a spacer 58, a rotating mechanism 60, and an external guide 59 attached to the rotating mechanism 60. An outer periphery of the rotating mechanism 60 engages with gears for transmission of rotation force of the rotary drive mechanism 54 to the rotating mechanism 60. Accordingly, when the rotary drive mechanism 54 is driven, the rotating mechanism 60 is rotated. A rotation angle of the rotating mechanism 60 has only to allow edgewise bending of the wire 15. In the present embodiment, the wire 15 is to be bent at an angle of 90° and thus the rotation angle of the rotating mechanism 60 is set at 90°. It is to be noted that the rotation angle may be set at more than 90° in consideration of springback of the wire 15.

The restraining mechanism 57 includes a flange 57a and a shaft 57b which are integrally formed. The restraining mechanism 57 is arranged to be movable in a vertical direction with respect to the base 56. When moved toward the base 56, the restraining mechanism 57 compresses part of the wire 15 to reduce the thickness (length) of a short side thereof.

The spacer 58 is a cylindrical member placed around the shaft 57b and has a thickness (height in Fig. 2) equal to the dimension for restraining the wire 15. This restraining dimension will be mentioned later. The spacer 58 is circumferentially formed with a chamfer 58a at a corner facing the flange 57a. Specifically, this chamfer 58a faces a joint part 57d joining the flange 57a and the shaft 57b of the restraining mechanism 57 to avoid contact with a rounded portion of the joint part 57d.

The rotating mechanism 60 is provided with bearings or the like so that the rotating mechanism 60 is rotatable with respect to the base 56. Thus, the external guide 59 is moved in association with the rotation of the rotating mechanism 60.

The external guide 59 is also movable in a direction perpendicular to the shaft 57b so that the external guide 59 is moved toward the shaft 57b in holding and restraining the wire 15. After the wire 15 is pressed by the external guide 59, the rotating mechanism 60 is rotated by the rotary drive mechanism 54, thereby edgewise bending the wire 15.

The edgewise bending processing apparatus 50 of the present embodiment having the above configuration is operated to produce a coil as follows.

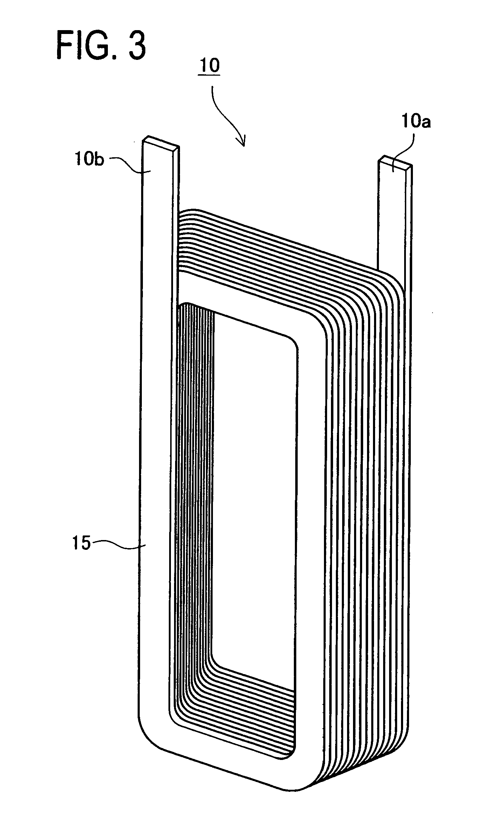

Fig. 3 is a perspective external view of the coil 10 produced by the edgewise bending processing apparatus 50. The coil 10 is made in such a manner that the wire 15 is bent edgewise. Specifically, the wire 15 is wound for fifteen turns between a start end 10a and a last end 10b. The shape of the coil 10 is determined to meet a desired shape for a stator or rotor of a motor not shown.

In the present embodiment, teeth (a tooth) of the stator has a trapezoidal shape tapering toward the center of the stator. Accordingly, a first turn of the wire 15 on the start end 10a side is different in length of one turn from a fifteenth turn on the last end 10b side. Concretely, the fifteenth turn is shorter than the first turn. This configuration may be changed appropriately according to the specifications of the motor. It is of course possible to appropriately change the number of turns and which end, 10a or 10b, should be placed on the inner side of the stator or rotor.

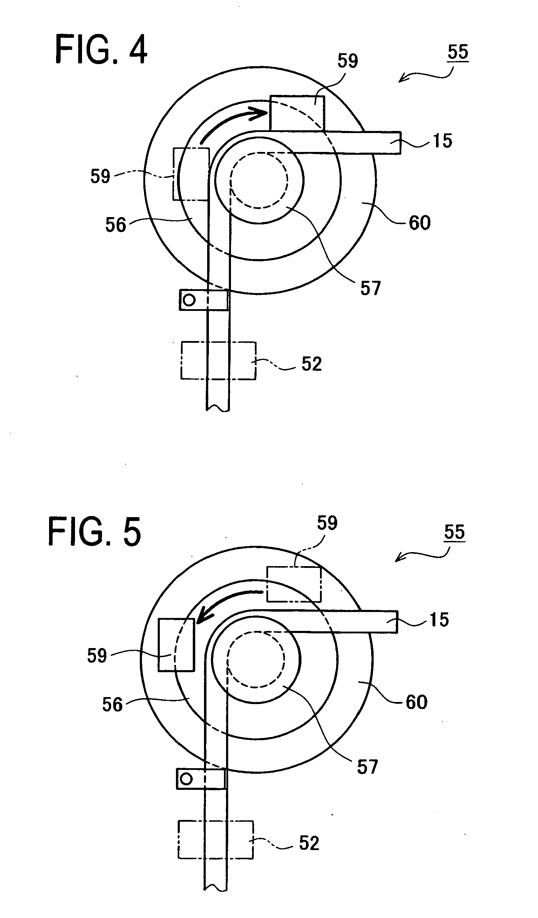

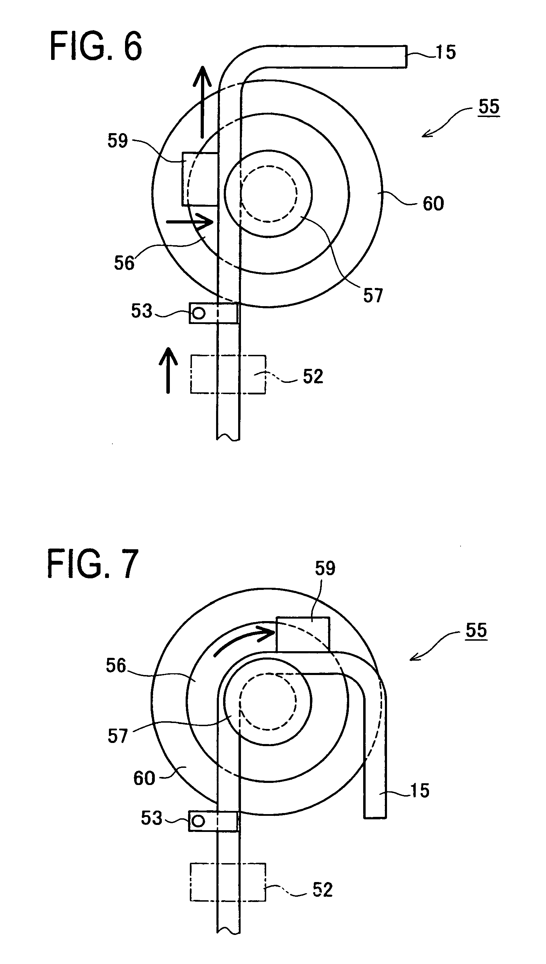

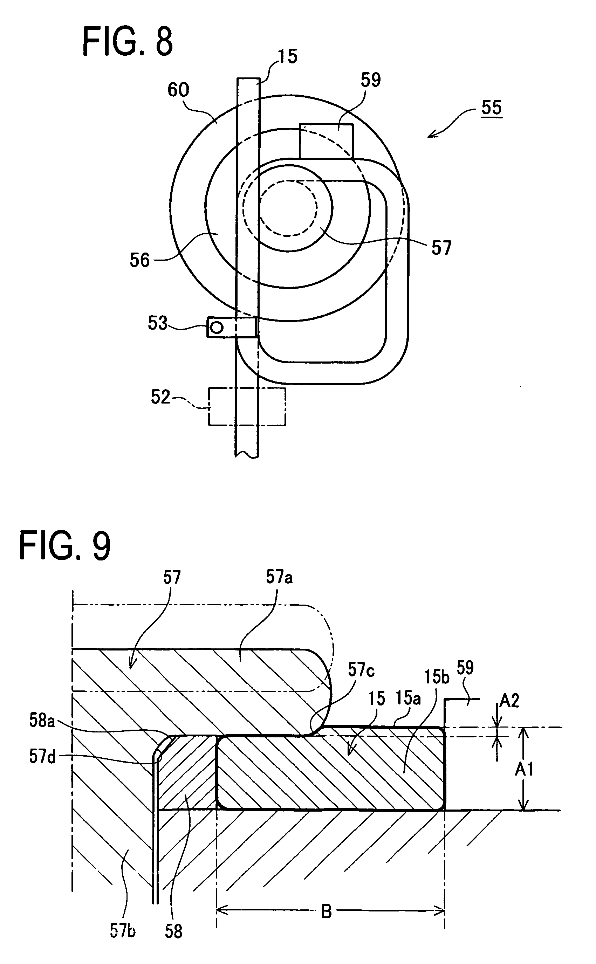

A process for winding the coil 10 (the wire 15) will be explained referring to Figs. 4 to 8. Fig. 4 is a schematic plan view showing a state where the wire 15 is bent edgewise. Fig. 5 is a schematic plan view showing a state where the external guide 59 returns to the original position to release the wire 15. Fig. 6 is a schematic plan view showing a state where the wire 15 is fed by the feeding mechanism 52. Fig. 7 is a schematic plan view showing a state where a second portion of the wire 15 is bent edgewise to form a second corner. Fig. 8 is a schematic plan view showing a state where a fourth portion of the wire 15 is bent edgewise to form a fourth corner.

In a first step of edgewise bending the wire 15, the wire is unwound from the uncoiler 51 as shown in Fig. 1 and fed by a predetermined length (distance) by the feeding mechanism 52. The feeding mechanism 52 holds part of the wire 15 by a chuck and feeds it by the predetermined length by the drive mechanism. This length is determined according to the shape of the coil 10.

In a second step, the wire 15 having been fed by the predetermined length is held against movement by the clamp mechanism 53. The chuck of the feeding mechanism 52 is then unlocked and the restraining mechanism 57 and the external guide 59 are moved into contact with the wire 15 to restrain it in the following manner.

As shown in Fig. 2, the restraining mechanism 57 includes a lifting mechanism. This lifting mechanism moves the flange 57a of the restraining mechanism 57 to press part of a surface of the wire 15 including a long side in section.

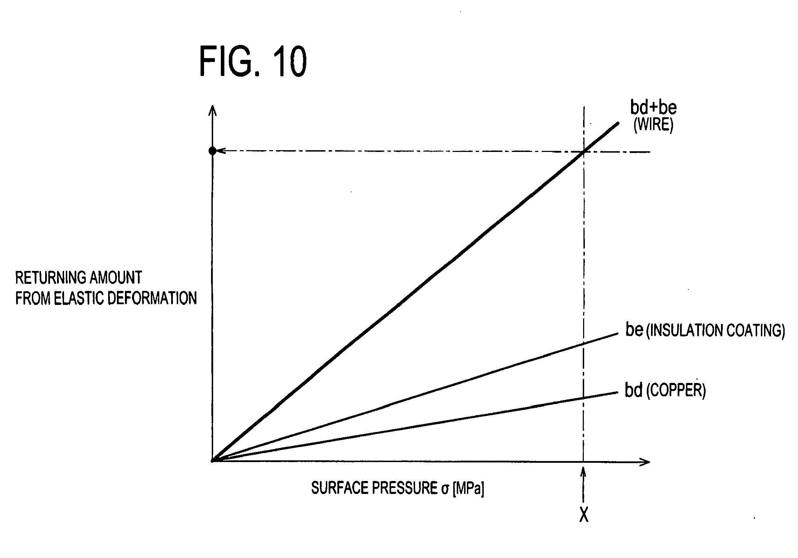

The height of the flange 57a is restricted by the height of the spacer 58 surrounding the shaft 57b. The height of the spacer 58 is slightly shorter than the length of the short side (i.e. the thickness) of the wire 15. This dimension is explained below referring to Figs. 9 and 10.
Fig. 9 is an enlarged sectional view showing a state where the wire 15 is partly pressed by the flange 57a.

In Fig. 9, the wire 15 is constituted of a copper material 15b having a rectangular cross section with two opposite short sides A1 and two opposite long sides B and an insulation coating 15a entirely coating the material 15b. The flange 57a restrains the wire 15 by compressing part of the wire 15, reducing the length of the short side thereof. A compression amount (distance) A2 at that time is set in an elastic deformation range of each of the insulation coating 15a and the copper material 15b.

Fig. 10 is a graph showing a relationship between elastic deformation and surface pressure. In the graph, a vertical axis indicates a returning amount (distance) resulting from the elastic deformation and a lateral axis indicates surface pressure D applied in a direction along the short side A1, that is, applied on the surface of the wire 15 including the long side B (the upper surface in Fig. 9). In this example, the insulation coating 15a is made of enamel. The graph also indicates an elastic restoration amount "bd" of copper ("copper elastic restoration amount bd"), which is a returning amount of the copper material 15b by its elasticity, an elastic restoration amount "be" of enamel ("enamel elastic restoration amount be"), which is a returning amount of the insulation coating 15a by its elasticity, and a total elastic restoration amount "bd+be" which is a total returning amount of the wire 15.

The copper elastic restoration amount "bd" is calculated by dividing the thickness of the copper material 15b by an elasticity coefficient Ed of copper ("copper elasticity coefficient Ed") and multiplying a result by the surface pressure D. The enamel elastic restoration amount "be" is calculated by dividing the thickness of the insulation coating 15a by an elasticity coefficient Ee of enamel ("enamel elasticity coefficient Ed") and multiplying a result by the surface pressure D.

The surface pressure D applied in the direction along the short side A1 is determined by analysis of a contact area between the wire 15 and the flange 57a and others. The compression amount A2 can be determined from the graph showing the total elastic restoration amount "bd+be".

In the lateral axis in Fig. 10, a maximum value of the surface pressure X on the wire 15 exerted by the flange 57a is indicated. Thus, the compression amount A2 is determined by an intersection point of a straight line representing the total elastic restoration amount "bd+be" and a dashed line representing the maximum value X. By subtracting the thus determined compression amount A2 from the length of the short side A1, the height of the spacer 58 is determined.

After the wire 15 is pressed by the restraining mechanism 57, the wire 15 is also pressed by the external guide 59. The guide 59 is in a standby position prior to feeding of the wire 15 so as to allow the wire 15 to be easily fed. The guide 59 is moved to a predetermined position after feeding of the wire 15 and pressed by the restraining mechanism 57.

When the wire 15 is retained by the restraining mechanism 57 and the external guide 59, the feeding mechanism 52 is unchucked and returned to its original position. This returning to the original position is preferably performed during the following third step.

In a third step, the wire 15 is bent edgewise. For edgewise bending the wire 15, specifically, the rotating mechanism 60 is rotated and accordingly the external guide 59 attached on the upper surface of the rotating mechanism 60 is moved while pressing the surface of the wire 15 including the short side A1.

The rotation of the rotating mechanism 60 is caused by power transmitted from the rotary drive mechanism 54. The rotating mechanism 60 is rotatably supported by the base 56 via the bearings or the like and therefore is rotated by the rotary drive mechanism 54.

The wire 15 is restrained by the flange 57a so that the length of the short side (thickness) of the wire 15 is reduced by the compression amount A2. Thus, in the edgewise bending, the wire 15 is pressed by the guide 59 into a clearance defined by the lower surface of the flange 57a and the upper surface of the base 56. However, the flange 57a has a round, lower outer periphery 57c, so that the wire 15 is smoothly pressed into the clearance between the lower surface of the flange 57a and the upper surface of the base 56. Since the compression amount A2 is about several tens µm, the above configuration can achieve the edgewise bending process.

In a fourth step, the restraining mechanism 57 and the external guide 59 which restrain the wire 15 are moved to release the wire 15 as follows.

After the wire 15 is bent edgewise, the external guide 59 is moved to the standby position and the rotating mechanism 60 is rotated back to the original position. At that time, the restraining mechanism 57 is moved apart from the wire 15 to release the restraining force thereon.

Returning to the first step, the feeding mechanism 52 chucks the wire 15 and then the clamp mechanism 53 is released. The wire 15 is fed by the predetermined length again by the feeding mechanism 52. This state is shown in Fig. 6. Then, via the second step, the third step is performed to edgewise bend a second portion of the wire 15 as shown in Fig. 7, forming a second corner. As above, the wire 15 is fed accurately by the feeding mechanism 52 and therefore the wire 15 can be bent edgewise at predetermined portions.
The above steps are repeated to wind the wire 15 for each turn as shown in Fig. 8 to complete the coil 10.

The edgewise bending processing apparatus 50 of the present embodiment having the above configurations and operations can exhibit the following advantages.

As a first advantage of edgewise bending the wire 15 as above, the coil 10 can be produced without bulging at the inner periphery.

By the above edgewise bending process for edgewise bending the wire 15 by use of the flange 57a spaced at a fixed distance from the upper surface of the base 56, it is possible to prevent the coil 10 from bulging at the inner periphery due to plastic deformation. The edgewise bending process is performed by pressing part of the wire 15 which will form the inner periphery part of the coil 10 to reduce the short side of the wire 15 to a length (A1 (the short side) - A2 (the compression amount)). Accordingly, the coil 10 can be prevented from bulging at the inner periphery due to elastic deformation.

The wire 15 is bent edgewise as above with its part being pressed by the restraining mechanism 57 in consideration of the elastic deformation of the wire 15. After the edgewise bending process, accordingly, the coil 10 will not bulge at the inner periphery, resulting in an enhanced coil space factor when the coil 10 is mounted in a slot of a stator.

For the coil 10 to be used for a stator of a vehicle motor, the space factor of the coil 10 when placed in the slot of the stator is very important. The elastic deformation of the wire 15 bent edgewise does not have much influence on the short side A1 of each turn. However, the finished coil 10 having over ten turns of the wire 15 has to be inserted in a slot and thus such slight returning of the elastically deformed part of the wire 15 will exert an influence on the coil space factor. The applicant confirmed by rough calculation that the increase in the short side A1 due to elastic deformation resulted in a decrease in coil space factor of several percent.

In particularly, when the wire 15 including the insulation coating 15a around the copper material 15b as in the present embodiment is to be bent edgewise, the elastic deformation amount of the insulation coating 15a is not negligible. In general, resin has a higher elastic deformation ratio than metal. Thus, even though the insulation coating 15a is formed with a thickness of just about several tens µm around the copper material 15b, the insulation coating 15a will occupy a high percentage in the increase in the short side A1 of the edgewise bent wire 15. This is because the copper elasticity coefficient "Ed" is about 70 GPa while the enamel elasticity coefficient "Ee" is about 3000 MPa which is more than twenty times larger than the copper elasticity coefficient.

If the edgewise bent rectangular-section wire bulges at the inner periphery due to the elastic deformation, the coil space factor thereof changes by several percent, which was confirmed by the applicant. Therefore, when the edgewise bending is performed in consideration of even the influence of the elastic deformation to produce the coil 10 to be used in a vehicle motor or others severely demanded for size reduction and high output power, the short side A1 can be maintained.

As a second advantage, the height of the spacer 58 placed surrounding the shaft 57b is set to a value "A1 (the short side) - A2 (the compression amount)", to avoid any influences on the wire 15 in the bending process, such as tilting of the spacer 58, extension of the shaft 57b, and depression of the base 56.

The restraining mechanism 57 includes the shaft 57b inserted through the base 56. Accordingly, the restraining mechanism 57 can move vertically relative to the surface of the wire 15 including the long side B to apply pressure the wire 15.

For instance, when the flange 57a directly presses the wire 15 against the base 56 without the spacer 58, only a small part of the lower surface of the flange 57a contacts with the wire 15 and a large part of the lower surface does not contact with the wire 15. Accordingly, the flange 57a is caused to tilt about the shaft 57b to one side opposite the part pressing the wire 15. Due to tilting of the flange 57a, the wire 15 cannot be pressed with high accuracy of dimension. In this configuration, further, the shaft 57b may be extended and the base 56 may be depressed. Thus, the dimensional accuracy for pressing the wire 15 cannot be ensured. This results in variations in pressure on the wire 15; for example, excessive pressure or insufficient pressure.

On the other hand, the spacer 58 is used in the present embodiment, preventing such tilting of the flange 57a. Even when the shaft 57b is extended or the base 56 is depressed, the restraining dimension of the wire 15 is determined by the height of the spacer 58 and therefore the dimensional accuracy can be ensured.

Further, the spacer 58 offers the advantage of being unrestricted in the shape of the restraining mechanism 57. This mechanism 57 including the integrally formed flange 57a and shaft 57b has to be subjected to machining to round the joint part 57d joining the flange 57a and the shaft 57b.

This rounding is intended to reduce stress concentration in the joint part 57d between the flange 57a and the shaft 57b. The spacer 58 is formed with the chamfer 58a facing the rounded portion of the joint part 57d, so that the spacer 58 does not interfere with the restraining mechanism 57.

If the spacer 58 is not provided, the wire 15 comes into contact with the joint part 57d between the flange 57a and the shaft 57b. If the joint part 57d is formed with a rounded portion, furthermore, a corner of the wire 15 that contacts with the joint part 57d may be deformed into a rounded surface conforming to the rounded portion of the joint part 57d. This may cause a decrease in coil space factor. However, the spacer 58 with the chamfer 58a provided in the present embodiment can avoid such disadvantage.

As a third advantage, the use of the clamp mechanism 53 can enhance the dimensional accuracy of the finished coil 10.

The clamp mechanism 53 installed in the edgewise bending processing apparatus 50 serves to hold the wire 15 in the position to which the wire 15 has been fed by the feeding mechanism 52. In the edgewise bending process, a strong force may be generated near the restraining mechanism 57 when the external guide 59 is moved in association with the rotation of the rotating mechanism 60. Without the clamp mechanism 53, therefore, the wire 15 may be displaced even though restrained by the restraining mechanism 57.

To prevent such displacement of the wire 15, the apparatus 50 of the present embodiment includes the clamp mechanism 53 to hold the wire 15 in place, thereby achieving an accurate bending operation.

It is also conceivable to hold the wire 15 by the feeding mechanism 52 instead of the clamp mechanism 53. If the feeding mechanism 52 holds the wire 15, the feeding mechanism 52 is not allowed to unchuck the wire 15 as long as the edgewise bending step is in progress by the bending unit 55. If the feeding mechanism 52 is not permitted to move during the edgewise bending step, the subsequent step may not be started right after termination of the bending step. It is therefore preferable to additionally provide the clamp mechanism 53.

As a fourth advantage, further, the edgewise bending processing apparatus 50 includes the feeding mechanism 52, the clamp mechanism 53, and the bending unit 55, separately. Thus, the time needed for the bending process can be shortened.

As explained above, the wire 15 is clamped by the clamp mechanism 53 during the edgewise bending step of the wire 15 by the bending unit 55. Accordingly, the feeding mechanism 52 is permitted to unchuck the wire 15 and return to the original position. After it is confirmed that the wire 15 is chucked by the clamp mechanism 53 after termination of the first step, the feeding mechanism 52 unchucks the wire 15 and is returned to the original position. This makes it possible to chuck the wire 15 just after the fourth step to start the first step again immediately.

The present invention may be embodied in other specific forms without departing from the claims.

For instance, the schematic configuration of the edgewise bending processing apparatus shown in the above embodiment may be modified or changed as to the chuck technique, the drive technique, and others. For example, the above embodiment shows the configuration that the rotating mechanism 60 is operated by the rotary drive mechanism 54 via the gears arranged on the outer periphery of the rotating mechanism 60. Alternatively, the rotating mechanism 60 may be operated by use of a pulley, an index table, etc. The materials of each component exemplified in the above embodiment may be replaced with any other appropriate materials.

## Claims

1. An edgewise bending processing method for a rectangular-section wire comprising the steps of:
restraining the rectangular-section wire (15) having a rectangular cross section with long sides (B) and short side (A1) by restraining means (57) in such a way as to press a surface of the wire including the long side (B) and hold the wire in contact with a surface of the wire including the short side (A1); and
edgewise bending the rectangular-section wire (15) by bending means (55);
wherein the restraining means (57) restrains part of the wire in a restraining dimension that is shorter than a length of the short side (A1) of the wire and in a range of elastic deformation of the wire, and
the bending means (55) bends the wire edgewise at the short side (A1) of the wire that is in contact with the restraining means (57).

2. The edgewise bending processing method for the rectangular-section wire according to claim 1, wherein
the rectangular-section wire (15) is coated with a coating material (15a).

3. The edgewise bending processing method for the rectangular-section wire according to claim 1 or 2, wherein
the restraining means (57) includes a flange (57a) whereby the surface of the rectangular-section wire (15) including the long side (B) is pressed, a base (56) provided facing the flange (57a), a shaft (57b) inserted through the base, and a spacer (58) having thickness corresponding to the restraining dimension, and
the spacer (58) is formed with a chamfer (58a) at a corner facing a joint part joining the shaft (57b) and the flange (57a).

4. The edgewise bending processing method for the rectangular-section wire according to any one of claims 1 to 3, the method comprising:
a first step of feeding the rectangular-section wire (15) by feeding means (52);
a second step of holding the wire (15) in place by clamp means (53) and restraining the wire (15) by the restraining means (57);
a third step of edgewise bending the wire (15) by the bending means (55) while the wire is held by the clamp means (53); and
a fourth step of releasing the rectangular-section wire (15) from the clamp means (53) and the restraining means (57);
the first to fourth steps being repeatedly performed.

5. An edgewise bending processing apparatus for rectangular-section wire, the apparatus comprising:
restraining means (57) for restraining the rectangular-section wire (15) having a rectangular cross section with long sides (B) and short sides (A1) in such a way as to press a surface of the wire including the long side and hold the wire in contact with a surface of the wire including the short side; and
bending means (55) for edgewise bending the rectangular-section wire (15);
wherein the restraining means (57) restrains part of the wire (15) in a restraining dimension that is shorter than a length of the short side of the wire and in a range of elastic deformation of the wire, and
the bending means (55) bends the wire edgewise at the short side of the wire that is in contact with the restraining means (57).

6. The edgewise bending processing apparatus for rectangular-section wire according to claim 5, wherein
the restraining means (57) includes a flange (57a) whereby the surface of the rectangular-section wire (15) including the long side is pressed, a base (56) provided facing the flange (57a), a shaft (57b) inserted through the base, and a spacer (58) having thickness corresponding to the restraining dimension, and
the spacer (58) is formed with a chamfer (58a) at a corner facing a joint part joining the shaft (57b) and the flange (57a).

## Patentansprüche

1. Hochkant-Biegeverfahren für einen Draht mit rechteckigem Querschnitt, das die folgenden Schritte aufweist:
Einspannen des Drahtes mit rechteckigem Querschnitt (15), der einen rechteckigen Querschnitt mit langen Seiten (B) und kurzen Seiten (A1) aufweist, durch eine Einspanneinrichtung (57) derart, dass eine Oberfläche des Drahtes, die die Seite (B) enthält, gedrückt wird und der Draht mit einer Oberfläche des Drahtes, die die kurze Seite (A1) enthält, in Kontakt gehalten wird; und
Hochkant-Biegen des Drahtes mit rechteckigem Querschnitt (15) durch eine Biegeeinrichtung (55);
wobei die Einspanneinrichtung (57) einen Teil des Drahtes in einer Einspannabmessung, die kürzer als eine Länge der kurzen Seite (A1) des Drahtes ist, und in einem Bereich einer elastischen Verformung des Drahtes einspannt, und
die Biegeeinrichtung (55) den Draht an der kurzen Seite (A1) des Drahtes, der sich in Kontakt mit der Einspanneinrichtung (57) befindet, hochkantig biegt.

2. Hochkant-Biegeverfahren für den Draht mit rechteckigem Querschnitt nach Anspruch 1, wobei
der Draht mit rechteckigem Querschnitt (15) mit einem Beschichtungsmaterial (15a) beschichtet ist.

3. Hochkant-Biegeverfahren für den Draht mit rechteckigem Querschnitt nach Anspruch 1 oder 2, wobei
die Einspanneinrichtung (57) enthält: einen Flansch (57a), durch den die Oberfläche des Drahtes mit rechteckigem Querschnitt (15), die die lange Seite (B) enthält, gedrückt wird, eine Basis (56), die dem Flansch (57a) gegenüberliegend vorgesehen ist, eine Welle (57b), die durch die Basis eingeführt ist, und einen Abstandshalter (58), der eine Dicke aufweist, die der Einspannabmessung entspricht, und
der Abstandshalter (58) mit einer Abschrägung (58a) an einer Ecke, die einem Verbindungsteil, das die Welle (57b) und den Flansch (57a) verbindet, gegenüberliegt, ausgebildet ist.

4. Hochkant-Biegeverfahren für den Draht mit rechteckigem Querschnitt nach einem der Ansprüche 1 bis 3, das aufweist:
einen ersten Schritt zum Zuführen des Drahtes mit rechteckigem Querschnitt (15) durch eine Zufuhreinrichtung (52);
einen zweiten Schritt zum Halten des Drahtes (15) an Ort und Stelle durch eine Klammereinrichtung (53) und zum Einspannen des Drahtes (15) durch die Einspanneinrichtung (57);
einen dritten Schritt zum Hochkant-Biegen des Drahtes (15) durch die Biegeeinrichtung (55), während der Draht durch die Klammereinrichtung (53) gehalten wird; und
einen vierten Schritt zum Freigeben des Drahtes mit rechteckigem Querschnitt (15) aus der Klammereihrichtung (53) und der Einspanneinrichtung (57);
wobei der erste bis vierte Schritt wiederholt durchgeführt werden.

5. Vorrichtung zum Hochkant-Biegen eines Drahtes mit rechteckigem Querschnitt, die aufweist:
eine Einspanneinrichtung (57) zum Einspannen des Drahtes mit rechteckigem Querschnitt (15), der einen rechteckigen Querschnitt mit langen Seiten (B) und kurzen Seiten (A1) aufweist, derart, dass eine Oberfläche des Drahtes, die die lange Seite enthält, gedrückt wird und der Draht mit einer Oberfläche des Drahtes, die die kurze Seite enthält, in Kontakt gehalten wird; und
eine Biegeeinrichtung (55) zum Hochkant-Biegen des Drahtes mit rechteckigem Querschnitt (15);
wobei die Einspanneinrichtung (57) einen Teil des Drahtes (15) in einer Einspannabmessung, die kürzer als eine Länge der kurzen Seite des Drahtes ist, und in einem Bereich einer elastischen Verformung des Drahtes einspannt, und
die Biegeeinrichtung (55) den Draht an der kurzen Seite des Drahtes, der sich in Kontakt mit der Einspanneinrichtung (57) befindet, hochkantig biegt.

6. Vorrichtung zum Hochkant-Biegen eines Drahtes mit rechteckigem Querschnitt nach Anspruch 5, wobei
die Einspanneinrichtung (57) enthält: einen Flansch (57a), durch den die Oberfläche des Drahtes mit rechteckigem Querschnitt (15), die die lange Seite enthält, gedrückt wird, eine Basis (56), die dem Flansch (57a) gegenüberliegend vorgesehen ist, eine Welle (57b), die durch die Basis eingeführt ist, und einen Abstandshalter (58), der eine Dicke aufweist, die der Einspannabmessung entspricht, und
der Abstandshalter (58) mit einer Abschrägung (58a) an einer Ecke, die einem Verbindungsteil, der die Welle (57b) und den Flansch (57a) verbindet, gegenüberliegt, ausgebildet ist.

## Revendications

1. Procédé de traitement de cintrage sur chant pour un fil métallique de section rectangulaire comprenant les étapes consistant à :
retenir le fil métallique de section rectangulaire (15) ayant une section transversale rectangulaire avec des côtés longs (B) et des côtés courts (A1) par des moyens de retenue (57) de façon à presser une surface du fil métallique incluant le côté long (B) et maintenir le fil en contact avec une surface du fil métallique incluant le côté court (A1) ; et
cintrer sur chant le fil métallique de section rectangulaire (15) par des moyens de cintrage (55) ;
dans lequel les moyens de retenue (57) retiennent une partie du fil métallique dans une dimension de retenue qui est plus courte qu'une longueur du côté court (A1) du fil et dans une plage de déformation élastique du fil métallique, et
les moyens de cintrage (55) cintrent le fil métallique sur chant du côté court (A1) du fil métallique qui est en contact avec les moyens de retenue (57).

2. Procédé de traitement de cintrage sur chant pour le fil métallique de section rectangulaire selon la revendication 1, dans lequel
le fil métallique de section rectangulaire (15) est recouvert avec un matériau de revêtement (15a).

3. Procédé de traitement de cintrage sur chant pour le fil métallique de section rectangulaire selon la revendication 1 ou 2, dans lequel
les moyens de retenue (57) incluent un rebord (57a) moyennant quoi la surface du fil métallique de section rectangulaire (15) incluant le côté long (B) est pressée, une base (56) placée face au rebord (57a), un arbre (57b) inséré à travers la base, et une entretoise (58) ayant une épaisseur correspondant à la dimension de retenue, et
l'entretoise (58) est formée avec un chanfrein (58a) en un coin faisant face à une partie de jonction joignant l'arbre (57b) et le rebord (57a).

4. Procédé de traitement de cintrage sur chant pour le fil métallique de section rectangulaire selon l'une quelconque des revendications 1 à 3, le procédé comprenant :
une première étape d'alimentation du fil métallique de section rectangulaire (15) par des moyens d'alimentation (52) ;
une seconde étape de maintien du fil métallique (15) en place par des moyens de pincement (53) et de retenue du fil métallique (15) par les moyens de retenue (57) ;
une troisième étape de cintrage sur chant du fil métallique (15) par les moyens de cintrage (55) alors que le fil est maintenu par les moyens de pincement (53) ; et
une quatrième étape de libération du fil métallique de section rectangulaire (15) des moyens de pincement (53) et des moyens de retenue (57) ;
les première à quatrième étapes étant réalisées de manière répétée.

5. Dispositif de traitement de cintrage sur chant pour un fil métallique de section rectangulaire, le dispositif comprenant :
des moyens de retenue (57) pour retenir le fil métallique de section rectangulaire (15) ayant une section transversale rectangulaire avec des côtés longs (B) et des côtés courts (A1) de façon à presser une - surface du fil métallique incluant le côté long et maintenir le fil métallique en contact avec une surface du fil métallique incluant le côté court ; et
des moyens de cintrage (55) pour cintrer sur chant le fil métallique de section rectangulaire (15) ;
dans lequel les moyens de retenue (57) retiennent une partie du fil métallique (15) dans une dimension de retenue qui est plus courte qu'une longueur du côté court du fil métallique et dans une plage de déformation élastique du fil métallique, et
les moyens de cintrage (55) cintrent le fil sur chant du côté court du fil métallique qui est en contact avec les moyens de retenue (57).

6. Dispositif de traitement de cintrage sur chant pour un fil métallique de section rectangulaire selon la revendication 5, dans lequel
les moyens de retenue (57) incluent un rebord (57a) moyennant quoi la surface du fil métallique de section rectangulaire (15) incluant le côté long (B) est pressée, une base (56) placée face au rebord (57a), un arbre (57b) inséré à travers la base, et une entretoise (58) ayant une épaisseur correspondant à la dimension de retenue, et
l'entretoise (58) est formée avec un chanfrein (58a) en un coin faisant face à une partie de jonction joignant l'arbre (57b) et le rebord (57a).
